# EUROPÄISCHE PATENTSCHRIFT

(11) **EP 3 287 097 B1**
(45) Veröffentlichungstag und Bekanntmachung des Hinweises auf die Patenterteilung: **10.04.2019**
(21) Anmeldenummer: 17186204.8
(22) Anmeldetag: 14.08.2017
(51) Int. Cl.: A61C 19/04, A61C 9/00

(54) **VERFAHREN ZUR KEPHALOMETRISCHEN BESTIMMUNG EINER KENNGRÖSSE EINES INDIVIDUUMS**
METHOD FOR CEPHALOMETRIC DETERMINATION OF AN INDICATOR FOR AN INDIVIDUAL
PROCÉDÉ D'ANALYSE CÉPHALOMÉTRIQUE D'UNE GRANDEUR CARACTÉRISTIQUE D'UN SUJET

(30) Priorität: 15.08.2016 DE 102016115092
(43) Veröffentlichungstag der Anmeldung: 28.02.2018
(73) Patentinhaber: Technische Universität Dresden, 01069 Dresden (DE)
(72) Erfinder: Gedrange, Tomasz, 01219 Dresden (DE); Dominiak, Marzena, 55-040 Tyniec Maly (PL)
(74) Vertreter: Riechelmann & Carlsohn Patentanwälte PartG mbB

(56) Entgegenhaltungen:
- WARMUZ JUSTYNA ET AL: "Influence of morphological parameters on the development of gingival recession in class III malocclusion", ANNALS OF ANATOMY, JENA, DE, Bd. 206, 7. Juni 2015 (2015-06-07), Seiten 64-72, XP029581973, ISSN: 0940-9602, DOI: 10.1016/J.AANAT.2015.04.008
- Justyna Warmuz ET AL: "Practical Application of a Method for Assessing the Progression of Gingival Recessions in Orthodontically Treated Patients - A Pilot Study", OHDM - Vol. 13 - No. 3, September 2014 (2014-09), XP055437179, Gefunden im Internet: URL:https://www.researchgate.net/profile/M arzena_Dominiak/publication/266626885_Prac tical_application_of_a_method_for_assessin g_the_progression_of_gingival_recessions_i n_orthodontically_treated_patients--a_pilo t_study/links/578e958508aecbca4caad3c0.pdf [gefunden am 2017-12-21]
- MARZENA DOMINIAK ET AL: "New Perspectives in the Diagnostic of Gingival Recession", ADVANCES IN CLINICAL AND EXPERIMENTAL MEDICINE, Bd. 23, Nr. 6, Januar 2014 (2014-01), Seiten 857-863, XP055437167, PL ISSN: 1899-5276, DOI: 10.17219/acem/27907

## Beschreibung

Die Erfindung betrifft ein Verfahren zur kephalometrischen Bestimmung einer Kenngröße eines Individuums. Sie betrifft auch die Verwendung eines Risikowertes zur Beurteilung des Risikos eines Zahnfleisch- und/oder Knochenschwundes an einem Schneidezahn eines Patienten. Sie betrifft außerdem ein Verfahren zur Beurteilung des Risikos eines Zahnfleisch- und/oder Knochenschwundes an einem Schneidezahn eines Patienten. Die erfindungsgemäßen Verfahren und die erfindungsgemäße Verwendung können insbesondere vor einer kieferorthopädischen und/oder parodontalen Therapie angewendet werden.

Gingiva- und Knochenrezessionen sind inzwischen Probleme, die nicht nur bei erwachsenen Patienten, sondern auch immer häufiger bei Kindern zu sehen sind. Veränderungen im orofazialen Bereich sowie die Anpassung des Organismus an Pathomechanismen sind noch nicht vollständig bekannt. Wieso Rezessionen entstehen, hängt unter anderem vom Typ der Gingiva (dünn oder dick), aber auch in großem Umfang von der Zahnposition ab. Eine epidemiologische Langzeitstudie konnte zeigen, dass Gingivarezessionen in einer westeuropäischen Population mit regelmäßiger zahnärztlicher Kontrolle und zufriedenstellender Mundhygiene bei mehr als 60 % der jüngeren (bis zum 20. Lebensjahr) und bei mehr als 90 % der älteren (> 50 Jahre) Personen vorlagen [1].

Einen möglichen ätiologischen Faktor für die Entstehung von Rezessionen stellt unter anderem die kieferorthopädische Zahnbewegung dar. Besonders die Bewegung von Zähnen in Positionen außerhalb der labialen oder lingualen Oberfläche des Alveolarknochens könnte zur Entstehung von Dehiszenzen führen [2]. Es bestehen bis jetzt keine Verfahren zur Bestimmung der Schneidezahnposition und der gleichzeitigen Bestimmung des Knochenangebotes. Es ist allerdings umstritten, ob kieferorthopädische Zahnbewegungen tatsächlich Gingivarezessionen verursachen können oder ob sich Gingiva und Knochen an die neue Position der Zähne anpassen, wenn keine weiteren traumatisierenden Faktoren, wie etwa heftiges Putzen der Zähne, dazukommen. In der Literatur finden sich dazu widersprüchliche Aussagen [3].

Zusammenfassend lässt sich sagen, dass bis jetzt keine Methode, um Rezessionen zu vermeiden oder vorzubeugen, gefunden wurde, die eine Vermessung des Knochenangebotes in Abhängigkeit von einem morphologischen Parameter, wie der Frontzahnposition, vorschlägt.

Im Rahmen der Diagnostik des labiolingualen Knochenangebotes und der Knochenlamellen im Frontzahnbereich werden in der Kieferorthopädie am häufigsten Fernröntgenseitenbilder eingesetzt [4a, 4b]. Die meist computerunterstützte Messung erfolgt unter Verwendung von kommerziellen Programmen wie Dolphin Imaging & Management Solutions (CA, USA) und FRWin (Computer konkret AG, Deutschland). Da im unteren Frontzahnbereich am häufigsten Rezessionen, insbesondere nach einer kieferorthopädischen Therapie, aber auch altersbedingt auftreten, ist die Bestimmung der "idealen Unterkieferfrontzahnposition" von besonderem Interesse.

Es sind bereits viele Vermessungsmethoden zur Bestimmung der unteren Frontzahnposition oder Bestimmung des anterioren Knochenangebotes in diesem Bereich bekannt. Sie basieren auf einer zweidimensionalen Vermessung eines Winkels zwischen der sogenannten NB-Linie und der unteren Frontzahnachse [5, 6, 7]. Die gesamte Diagnostik und die spätere kieferorthopädische Therapie (mit Hilfe der Multiband-Behandlung zur Verbesserung der Schneidezahnposition) beziehen sich dann auf die Senkrechte zur Okklusionsebene [8]. Die Varianz in den Abweichungen durch Wahl dieser Bezugslinie (Okkusionsebene) führt dann meist zu klinischen Problemen in Form von Rezessionen.

Ein weiteres Verfahren stellt die Diagnostik anhand von Fotos oder die Einbindung von Fotos in Kombination mit Fernröntgenseitenbildern [9a, 9b] dar. Hierbei wurde festgestellt, dass eine reduzierte untere vordere Gesichtshöhe [10, 11, 12, 13, 14] sowie eine hohe Lippenschlusslinie [11, 13, 15, 16, 17] wahrscheinlich diejenigen Parameter sind, welche im Zusammenhang mit der Zahnposition am häufigsten erwähnt werden. Abgesehen davon ergaben viele Studien eine relativ große interindividuelle Variabilität bzw. widersprüchliche Ergebnisse in Bezug auf die meisten evaluierten kephalometrischen Parameter. Somit sind alle Verfahren, die keine direkte Zahnposition oder Knochendicke beurteilen, sehr unpräzise.

Es wurden auch Hilfsapparaturen entwickelt, die eine Diagnostik der Schneidezahnposition direkt von der Zahnkrone ermöglichen sollten. Diese können an Zahnmodellen oder direkt im Mund erfolgen. Aber auch eine Anwendung von Hilfsapparaturen ermöglicht keine Korrelation zwischen Achsenstellung der Zähne und dem vorhandenen Knochenangebot. Die Vermessungsmethode der Zahnkrone hat keinen Bezug zum Knochen oder zur Gingiva [18, 19, 20].

Die Computertomographie (CT) oder die digitale Volumentomographie (DVT) erlauben eine dreidimensionale Darstellung von Zahn und Knochen. Anhand der Darstellung der Strukturen ist eine gezielte Messung der Knochendicke sowie eine Bestimmung des Knochenverlustes nach der Behandlung möglich. Jetzige Verfahren ermöglichen allerdings keine Korrelation zur Zahnposition [21, 12, 23, 24]. Alleine durch die statische Bestimmung von Zahnposition und Knochendicke ist eine Prognose für eine Zahnbewegung nicht möglich.

Obwohl das Endergebnis der Zahnposition große Auswirkungen auf den Alveolarknochen hat und eine Reihe von Krankheitssymptomen verursacht, war es nicht möglich, so eine Diagnostikmethode zu finden. Es gibt eine ganze Reihe von Verfahren, die sich allerdings entweder auf die Messung des vorhandenen Knochenangebotes oder die Zahnposition beziehen. Die heutigen Messmethoden und die Beziehung zwischen den Schneidezähnen und den knöchernen Strukturen oder anderen dentofazialen Parametern werden in der Literatur kontrovers diskutiert. Es gibt nur vage Aussagen zur Auswertungsmöglichkeit der Veränderung der Zahnposition. Dabei kann keiner der kommerziellen Computerprogramme eine Vermessung der Relation Zahn- zum Alveolarkochen vornehmen und somit keine Aussage zu der Wahrscheinlichkeit des Auftretens von Rezession bei Veränderung der Frontzahninklination im Rahmen der Behandlung liefern.

Auch bei der Anwendung unterschiedlicher klinischer Verfahren zur Messung der Schneidezähne besteht kein Bezug zum Kieferknochen. Bei der Behandlung von Zahnschiefstand mittels MBT und Straight-Wire-Technik wird die Position der Schneidezähne auch nur zur Okklusionsebene festgelegt. Daher ist die Einstellung der gewünschten Schneidezahnposition während der Therapie häufig nur zufällig. Das aus DE 199 157 428 A1 bekannte Verfahren benötigt sehr viele Messverfahren für eine OP-Planung und auch zur Bestimmung der Schneidezahnposition, aber es wird auch hier kein Bezug zu Knochen hergestellt.

Warmuz, J., et al., Oral health and dental management, 13 (3) 2014, 772-778, Dominiak, M., Gedrange, T., Advances in clinical and experimental medicine: official organ Wroclaw Medical University, 23 (6) 2014, 857-863, und Warmuz, J., et al., Annals of anatomy, Vol. 206, 64-72, offenbaren die Berechnung eines Winkels API-CEJ2-B, wobei der Bezugspunkt CEJ2 allerdings nicht auf einer vertikalen Geraden um einen Abstandswert versetzt angeordnet ist.

Aufgabe der Erfindung ist es, die Nachteile nach dem Stand der Technik zu beseitigen. Es soll insbesondere ein Verfahren zur kephalometrischen Bestimmung einer Kenngröße eines Individuums angegeben werden, das eine zuverlässige Beurteilung des Risikos eines Zahnfleisch- und/oder Knochenschwundes an einem Schneidezahn eines Patienten ermöglicht. Es soll ferner die Verwendung eines Risikowertes zur Beurteilung des Risikos eines Zahnfleisch- und/oder Knochenschwundes an einem Schneidezahn eines Patienten angegeben werden. Außerdem soll ein Verfahren zur Beurteilung des Risikos eines Zahnfleisch- und/oder Knochenschwundes an einem Schneidezahn eines Patienten angegeben werden.

Diese Aufgabe wird durch die Merkmale der Ansprüche 1, 7 und 11 gelöst. Zweckmäßige Ausgestaltungen der Erfindungen ergeben sich aus den Merkmalen der Unteransprüche.

Nach Maßgabe der Erfindung ist ein Verfahren zur kephalometrischen Bestimmung einer Kenngröße eines Individuums vorgesehen, das das Bestimmen von Bezugspunkten in einer zwei- oder dreidimensionalen Aufnahme und das Bestimmen der Kenngröße aus den Bezugspunkten umfasst, wobei das Verfahren das
- Bestimmen eines ersten Bezugspunktes aL1, wobei der erste Bezugspunkt der Apex eines Schneidezahnes am Unterkiefer ist;
- Bestimmen eines zweiten Bezugspunktes B, wobei der zweite Bezugspunkt als B-Punkt der tiefste Punkt der anterioren Kontur des Unterkiefer-Alveolarfortsatzes in der Median-Sagittal-Ebene und der dorsalste Punkt an der Kurvatur der Unterkiefersymphyse ist;
- Bestimmen eines dritten Bezugspunktes CEJ, wobei der dritte Bezugspunkt auf der Zahnschmelzgrenze eines Schneidezahnes am Unterkiefer des Individuums liegt; und
- Bestimmen eines vierten Bezugspunktes CEJ2, der auf einer vertikalen Geraden, die durch den dritten Bezugspunkt CEJ verläuft, in Richtung der Unterkieferbasis um einen Abstandswert von dem dritten Bezugspunkt CEJ beabstandet ist, wobei der Abstandswert in einem Bereich von 1,3 mm bis 2,3 mm liegt;
umfasst und aus dem ersten Bezugspunkt aL1, dem zweiten Bezugspunkt B und dem vierten Bezugspunkt CEJ2 ein als individuelle Kenngröße dienender Winkel aL1-CEJ2-B bestimmt wird, dessen Scheitelpunkt der vierte Bezugspunkt CEJ2 ist, dessen erster Schenkel eine Gerade ist, die den vierten Bezugspunkt CEJ2 mit dem ersten Bezugspunkt aLl verbindet, und dessen zweiter Schenkel eine Gerade ist, die den vierten Bezugspunkt CEJ2 mit dem zweiten Bezugspunkt B verbindet.

Die Erfindung ermöglicht durch eine Vermessung von Fernröntgenseitenbildern oder anderen zwei- oder dreidimensionalen Aufnahmen insbesondere eine Feststellung des anterioren Alveolarknochenangebotes. Eine solche Feststellung kann beispielsweise für eine Prognose der nach einer kieferorthopädischen oder parodontalen Therapie zu erwartenden Frontzahnendposition mit der in aller Wahrscheinlichkeit zur erwartenden parodontalen Rezession genutzt werden. Bei dem Individuum kann sich um einen Patienten handeln. Es ist allerdings nicht zwingend erforderlich, dass das Individuum, dessen Aufnahme zur Durchführung des erfindungsgemäßen Verfahrens eingesetzt wird, einer zahnärztlichen, insbesondere einer kieferorthopädischen oder parodontalen Therapie unterzogen wird, auch wenn das erfindungsgemäße Verfahren vorzugsweise zur Vorbereitung einer solchen Therapie eingesetzt werden kann. In diesem Fall erlaubt das erfindungsgemäße Verfahren eine Therapieprognose im Hinblick auf die Vermeidung der Entstehung einer Rezession.

Das erfindungsgemäße Verfahren ermöglicht die Erstellung der Korrelation von direkt betroffenen dentalen und skelettalen Bezugspunkten. Dabei sind der erste Bezugspunkt aLl und der dritte Bezugspunkt CEJ dentale Bezugspunkten, während der zweite Bezugspunkt B ein skelettaler Bezugspunkt ist. Der vierte Bezugspunkt CEJ2 ist ein von dem dritten Bezugspunkt abgeleiteter Bezugspunkt.

Unter der Zahnschmelzgrenze (engl. cementoenamel junction) wird die am Zahn ausgebildete Grenze zwischen Zahnschmelz, der die Krone eines Zahns überzieht, und Zahngewebe, das die Wurzeln eines Zahns überzieht, verstanden. Erfindungsgemäß ist vorgesehen, dass der dritte Bezugspunkt CEJ auf der Zahnschmelzgrenze eines Schneidezahnes liegt. Dabei kann vorgesehen sein, dass der dritte Bezugspunkt CEJ der am tiefsten liegende Punkt und/oder der anteriorste Punkt der Zahnschmelzgrenze in der verwendeten Abbildung ist.

Von den Erfindern durchgeführte, vertikale Messungen zur Festlegung des Punktes CEJ2 haben ergeben, dass die durchschnittliche Höhe einer Dehiszenz bei gesunden Probanden 1,8 ± 0,5 mm betrug. Es ist daher zweckmäßig, einen Abstandswert zwischen dem dritten Bezugspunkt CEJ und dem vierten Bezugspunkt CEJ2 vorzusehen, der in einem Bereich von 1,3 bis 2,3 mm liegt. Vorzugsweise beträgt der Abstandswert zwischen dem dritten Bezugspunkt CEJ und dem vierten Bezugspunkt CEJ2 2 mm. Alternativ kann jedoch vorgesehen sein, dass der Abstandswert in Abhängigkeit von der Tiefe des Sulkus, der den Schneidezahn umgibt, bestimmt wird.

Die erfindungsgemäß eingesetzte zwei- oder dreidimensionale Aufnahme wird vorzugsweise mittels eines Röntgenverfahrens angefertigt. Beispielsweise kann es sich bei der zweidimensionalen Aufnahme um ein Fernröntgenseitenbild handeln. Die dreidimensionale Aufnahme kann mittels Computertomographie ("CT"), Magnetresonanztomographie, dentaler Volumentomographie ("DVT") oder anderer dreidimensionaler Aufnahmetechniken angefertigt werden. Vorzugsweise handelt es sich bei der zwei- oder dreidimensionalen Aufnahme um ein Fernröntgenseitenbild, eine dreidimensionale CT-Aufnahme oder eine dreidimensionale DVT-Aufnahme. Das Fernröntgenseitenbild zeigt vorzugsweise eine laterolaterale Aufnahme des Kopfes eines Individuums oder eines Teils des Kopfes, der den Kiefer umfasst.

Die Erfindung ermöglicht eine Beurteilung des anterioren Knochenangebotes im unteren Alveolarfortsatzbereich und der unteren Frontzahnposition unter zu Hilfenahme des ersten, zweiten, dritten und vierten Bezugspunktes. Diese Bezugspunkte sind in der nachstehenden Tabelle 1 näher erläutert:

**Tabelle 1**

| Bezugspunkt | Definition |
|---|---|
| aL1 | Erster Bezugspunkt: Apex des Unterkiefer-Schneidezahnes: Der apikalste Punkt der Wurzel des am weitesten anterior stehenden mittleren Unterkiefer-Schneidezahnes |
| B | Zweiter Bezugspunkt: B-Punkt: tiefster Punkt der anterioren Kontur des Unterkiefer-Alvoelarfortsatzes in der Median-Sagittal-Ebene; dorsalster Punkt an der Kurvatur der Unterkiefersymphyse |
| CEJ | Dritter Bezugspunkt: Liegt auf der Zahnschmelzgrenze eines Schneidezahnes am Unterkiefer des Individuums, für den das Knochenangebot berechnet wird. |
| CEJ2 | Vierter Bezugspunkt: Liegt auf einer vertikalen Geraden, die durch den dritten Bezugspunkt CEJ verläuft, und ist in Richtung der Unterkieferbasis um einen Abstandswert von dem dritten Bezugspunkt CEJ beabstandet. Er dient für die Berechnung des Winkels. |

Mittels der Bezugspunkte aL1, B, CEJ und CEJ2 kann ein Winkel aL1-CEJ2-B bestimmt werden, dessen Scheitelpunkt der vierte Bezugspunkt CEJ2 ist, dessen erster Schenkel eine Gerade ist, die den vierten Bezugspunkt CEJ2 mit dem ersten Bezugspunkt aL1 verbindet, und dessen zweiter Schenkel eine Gerade ist, die den vierten Bezugspunkt CEJ2 mit dem zweiten Bezugspunkt B verbindet. Der erste, zweite, dritte und vierte Bezugspunkt liegen vorzugsweise in einer Ebene der zwei- oder dreidimensionalen Aufnahme.

Die Verknüpfung der beiden Eigenschaften "anteriores Knochenangebot im unteren Alveolarfortsatzbereich" und "untere Frontzahnposition" ermöglichen eine Prognose der Zahnbewegung. Eine solche Prognose ist vor allem nützlich, um die Wahrscheinlichkeit einer Entwicklung von parodontalen Rezessionen zu bewerten. Das erfindungsgemäße Verfahren ermöglicht eine Auswertung der Knochen auf der labialen Seite des Unterkiefers.

Nach Maßgabe der Erfindung ist ferner die Verwendung des Winkels aL1-CEJ2-B zur Beurteilung des Risikos eines Zahnfleisch- und/oder Knochenschwundes an einem Schneidezahn eines Patienten vorgesehen. Das Risiko eines Zahnfleisch- und/oder Knochenschwundes besteht, wenn der Winkel aL1-CEJ2-B einen Wert besitzt, der unterhalb eines Risikowertes liegt. Die Erfinder haben festgestellt, dass ein Risikowert von 16° für die Beurteilung des Risikos vorteilhaft ist.

Der Winkel aL1-CEJ2-B kann dabei mittels des erfindungsgemäßen Verfahrens bestimmt werden. Das heißt mit anderen Worten, dass der Risikowert auf Grundlage der kephalometrischen Vermessung einer zwei- oder dreidimensionalen Aufnahme unter Verwendung des ersten, zweiten, dritten und vierten Bezugspunktes bestimmt wird. Der Risikowert ist der sogenannte kritische Wert der Breite des Knochens im vorderen Bereich des Unterkiefers. Die Erfinder haben festgestellt, dass es vorteilhaft ist, einen kritischen Wert von 16° zur Beurteilung des Risikos zu verwenden. Unterhalb dieses kritischen Wertes erhöht sich das Risiko von Zahnfleisch- und/oder Knochenschwund deutlich.

Nach Maßgabe der Erfindung ist außerdem ein Verfahren zur Beurteilung des Risikos eines Zahnfleisch- und/oder Knochenschwundes an einem Schneidezahn eines Patienten vorgesehen, dass die Schritte umfasst:
(a) Bereitstellen einer zwei- oder dreidimensionalen Aufnahme des Kopfes des Patienten oder eines Teils des Kopfes, der den Kiefer des Patienten umfasst;
(b) Bestimmen von Bezugspunkten in der zwei- oder dreidimensionalen Aufnahme, umfassend das
   - Bestimmen eines ersten Bezugspunktes aL1, wobei der erste Bezugspunkt der Apex des Schneidezahnes am Unterkiefer ist;
   - Bestimmen eines zweiten Bezugspunktes B, wobei der zweite Bezugspunkt als B-Punkt der tiefste Punkt der anterioren Kontur des Unterkiefer-Alveolarfortsatzes in der Median-Sagittal-Ebene und der dorsalste Punkt an der Kurvatur der Unterkiefersymphyse ist;
   - Bestimmen eines dritten Bezugspunktes CEJ, wobei der dritte Bezugspunkt auf der Zahnschmelzgrenze des Schneidezahnes am Unterkiefer des Patienten liegt; und
   - Bestimmen eines vierten Bezugspunktes CEJ2, der auf einer vertikalen Geraden, die durch den dritten Bezugspunkt CEJ verläuft, in Richtung der Unterkieferbasis um einen Abstandswert von dem dritten Bezugspunkt CEJ beabstandet ist, wobei der Abstandswert in einem Bereich von 1,3 mm bis 2,3 mm liegt;
(c) Bestimmen aus dem ersten Bezugspunkt aL1, dem zweiten Bezugspunkt B und dem vierten Bezugspunkt CEJ2 eines Winkels in der zwei- oder dreidimensionalen Aufnahme, dessen Scheitelpunkt der vierte Bezugspunkt CEJ2 ist, dessen erster Schenkel eine Gerade ist, die den vierten Bezugspunkt CEJ2 mit dem ersten Bezugspunkt aLl verbindet, und dessen zweiter Schenkel eine Gerade ist, die den vierten Bezugspunkt CEJ2 mit dem zweiten Bezugspunkt B verbindet; und
(d) Beurteilung des Risikos eines Zahnfleisch- und/oder Knochenschwundes an dem Schneidezahn des Patienten unter Verwendung des Winkels aL1-CEJ2-B als Risikowert, wobei das Risiko eines Zahnfleisch- und/oder Knochenschwundes besteht, wenn der Winkel aL1-CEJ2-B einen Wert besitzt, der unterhalb eines Risikowertes liegt.

Dieses Vorfahren kann insbesondere vor einer kieferorthopädischen oder parodontalen Therapie durchgeführt werden. Weitere Einzelheiten dieses Verfahrens sind vorstehend im Zusammenhang mit dem erfindungsgemäßen Verfahren zur kephalometrischen Bestimmung einer Kenngröße eines Individuums und der erfindungsgemäßen Verwendung des Winkels aL1-CEJ2-B zur Beurteilung des Risikos eines Zahnfleisch- und/oder Knochenschwundes an einem Schneidezahn eines Patienten bereits erläutert worden.

Durch die Verwendung des ersten, zweiten, dritten und vierten Bezugspunktes, die sowohl auf einem zweidimensionalen Fernröntgenseitenbild als auch auf einer dreidimensionalen CT- oder DVT-Aufnahme eindeutig zu lokalisieren sind und sich an dentalen und skelettalen Bezugspunkten orientieren, kann mit Hilfe des daraus generierten Winkels aL1-CEJ2-B eine Prognose über die individuell optimale untere Frontzahnposition getroffen werden. Damit kann die Entstehung von Rezessionen vermieden werden. Die Erfindung veranschaulicht, die Beziehung zwischen den dentalen und skelettalen Bezugspunkten.

Bei der Retrusion von Schneidezähnen befindet sich der Drehpunkt in der Nähe der Zahnwurzelspitze. Die maximale Belastung befindet sich am lingualen Übergangspunkt zwischen Knochenrand und Zahn. Dies bewirkt, dass die Knochenresorption relativ rasch und bei geringer Belastung entsteht. Bei der reinen Protrusion der Schneidezähne befindet sich der Drehpunkt in der Nähe des Zahnhalses. Eine maximale Belastung ist dann im vierten Bezugspunkt CEJ2 zu erwarten. Somit träten hier bei gleicher Belastung wie bei der Retrusion seltener Rezessionen auf. Eine Protrusion mit Elongation von Schneidezähnen erhöht das Risiko von Rezessionen und eine Intrusion verringert sich.

Die Erfindung bietet zahlreiche Vorteile. Sie kann die Planungssicherheit bei einer kieferorthopädischen Therapie erhöhen. Sie kann das Risiko der Entstehung von Rezessionen reduzieren. Sie kann in der Parodontaltherapie eingesetzt werden. Sie erlaubt die Vorhersage der anzuwendenden Biomechanik, d. h. Kraft, Richtung und Größe, einer zahnärztlich durchgeführten Drehung eines Zahnes.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine schematische Darstellung einer zweidimensionalen Aufnahme eines Teils des Kopfes eines Patienten;
- Fig. 2: einen vergrößerten Ausschnitt von Fig. 1, der den Unterkiefer mit einem Schneidezahn zeigt;
- Fig. 3: einen vergrößerten Ausschnitt von Fig. 2, der einen Teil des Schneidezahnes mit der Zahnschmelzgrenze zeigt; und
- Fig. 4: eine Darstellung nur des Winkels aL1-CEJ2-B mit den in den Figuren 2 und 3 gezeigten Bezugspunkten.

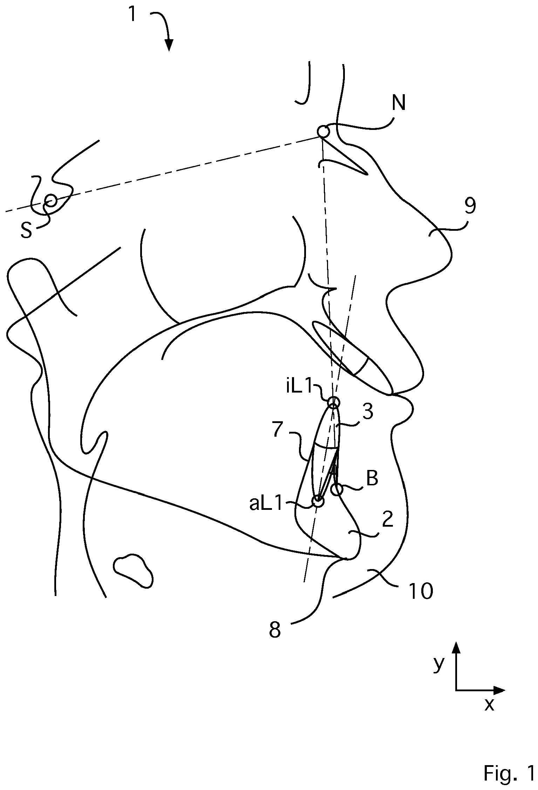

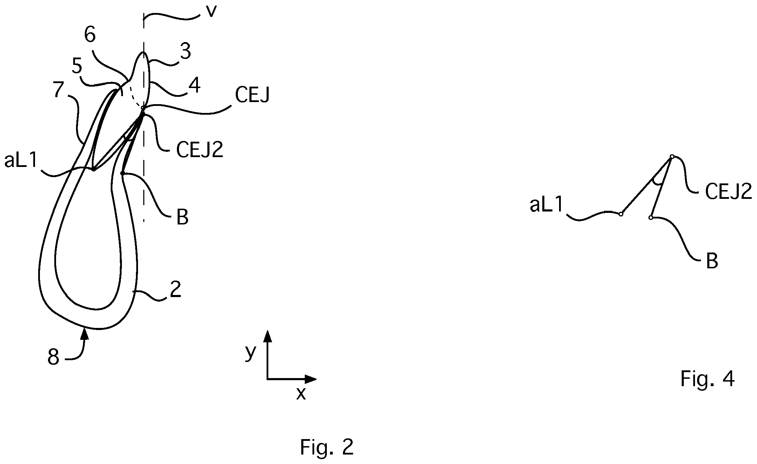

Die in Fig. 1 gezeigte Darstellung ist von einem Fernröntgenseitenbild abgeleitet. Eine derartige Darstellung kann aber auch von einer CT- oder DVT-Aufnahme abgeleitet werden. Die gezeigte Darstellung ist eine zweidimensionale schematische Wiedergabe des vorderen Teils einer laterolateralen Aufnahme des Kopfes 1, die insbesondere den Kiefer des Patienten, einschließlich Unterkieferknochen 2 und einen Schneidezahn 3, zeigt. Der Schneidezahn 3 weist eine Zahnkrone 4, die mit Zahnschmelz, überzogen ist, und eine Zahnwurzel 5 auf (siehe Fig. 2). Zwischen der Zahnkrone 4 und der Zahnwurzel 5 ist die Zahnschmelzgrenze 6 ausgebildet. Der Unterkieferknochen 2 weist den Alveolarfortsatz 7, der den Schneidezahn 4 trägt, und die Unterkieferbasis 8 auf, die dem Schneidezahn 3 abgewandt ist. In Fig. 1 sind ferner die Nase 9 und das Kinn 10 des Patienten zu erkennen.

In Fig. 1 sind aus dem Stand der Technik bekannte, konventionelle Bezugspunkte sowie die erfindungsgemäß verwendeten Bezugspunkte eingezeichnet. Die aus dem Stand der Technik bekannten, konventionellen Linien zwischen konventionellen Bezugspunkten sind in Fig. 1 durch Strich-Punkt-Linien gekennzeichnet. Die beiden Geraden des erfindungsgemäß vorgesehenen Winkels aL1-CEJ2-B sind in den Figuren 1 und 2 als Volllinien gezeigt.

In Fig. 1 sind die in Tabelle 2 erläuterten Bezugspunkte eingezeichnet:

**Tabelle 2**

| Bezugs punkt | Definition |
|---|---|
| S | Sella - Zentrum der knöchernen Krypte der Sella turcica: Er stellt einen konstruierten Punkt dar, der in der Median-Sagittal-Ebene liegt. |
| N | Nasion - Das Nasion ist der anterioste Punkt der Sutura naso-frontalis. Geht die Sutur nach vorn in eine offene V-Form über, so wird der posterieste Punkt des V verwendet. Der Punkt liegt in der Median-Sagittal-Ebene. |
| aL1 | Apex des Unterkiefer-Schneidezahnes: Der apikalste Punkt der Wurzel des am weitesten anterior stehenden mittleren Unterkiefer-Schneidezahnes |
| B | B-Punkt: der tiefste Punkt der anterioren Kontur des Unterkiefer-Alvoelarfortsatzes in der Median-Sagittal-Ebene; dorsalster Punkt an der Kurvatur der Unterkiefersymphyse |
| iL1 | Spitze des Unterkiefer-Schneidezahnes |

Der Winkel SNB ist ein Winkel, dessen Basis der Bezugspunkt N ist, dessen erster Schenkel eine Gerade ist, die den Bezugspunkt N mit dem Bezugspunkt S verbindet, und dessen zweiter Schenkel den Bezugspunkt N mit dem Bezugspunkt B verbindet. Der Normwert des Winkels SNB beträgt 80,5 Grad [25]. Eine Gerade verbindet den Bezugspunkt iL1 mit dem Bezugspunkt aL1.

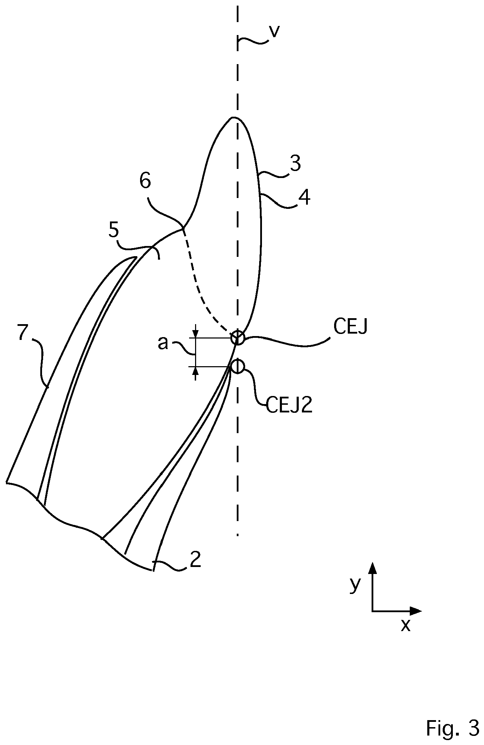

Die in der Erfindung genutzten Bezugspunkte zur Bestimmung des Winkels aL1-CEJ2-B sind insbesondere in Fig. 2 zu erkennen. Dort sind der erste Bezugspunkt aL1, der zweite Bezugspunkt B, der dritte Bezugspunkt CBJ und der vierte Bezugspunkt CBJ2 eingezeichnet. Der vierte Bezugspunkt CBJ2 ist auf einer vertikalen Geraden v in Richtung der Unterkieferbasis von dem dritten Bezugspunkt CBJ beabstandet (siehe insbesondere Fig. 3). Die vertikale Gerade v liegt parallel zur Höhenrichtung y der Aufnahme. Es ist ferner in Fig. 3 zu erkennen, dass der dritte Bezugspunkt CBJ der, in Bezug auf die Höhenrichtung y, am tiefsten liegende Punkt der Zahnschmelzgrenze 6 ist. In Fig. 3 ist der dritte Bezugspunkt gleichzeitig der dem Gesicht nächstliegende Punkt.

Mittels der Bezugspunkte aL1, CEJ2 und B ist der Winkel aL1-CEJ2-B festgelegt, dessen Scheitelpunkt der vierte Bezugspunkt CEJ2 ist, dessen erster Schenkel eine Gerade ist, die den vierten Bezugspunkt CEJ2 mit dem ersten Bezugspunkt aL1 verbindet, und dessen zweiter Schenkel eine Gerade ist, die den vierten Bezugspunkt CEJ2 mit dem zweiten Bezugspunkt B verbindet (siehe auch Fig. 4). Der Winkel aL1-CEJ2-B ermöglicht insbesondere eine Prognose der idealen unteren Frontzahninklination.

Die in den Figuren 1 bis 3 gezeigten Darstellungen beruhen auf einer Abbildung, wie sie sich von Fernröntgenseitenbildern, CT-Aufnahmen oder DVT-Aufnahmen ableiten lässt. Die abgebildete Unterkieferform ist zwar interindividuell anatomisch variabel, die Bezugspunkte lassen sich jedoch auf alle Unterkieferformen übertragen bzw. lokalisieren.

### Zitierte Literatur

1. Löe H, Anerud A, Boysen H. The natural history of periodontal disease in man: prevalence, severity, and extent of gingival recession. J Periodontol 1992; 63 (8): 489 - 495.
2. Wennström J L, Lindhe J, Sinclair F et al. Some periodontal tissue reactions to orthodontic tooth movement in monkeys. J Clin Periodontol 1987; 14 (3): 121 - 129.
3. Joss-Vassalli I, Grabenstein C., Topouzelis N., Sculean A., Katsaros C. Kieferorthopädische Therapie und Gingivarezessionen: Inf Orthod Kieferorthop 2011; 43: 263-273.
4a. US 5,318,441 A: Method Of Cephalometric Evaluation Of Dental Radiographs. 4b. US 8,805,048 B2: Method system orthodontic diagnosis.
5. Hasund A, Ulstein G. The position of the incisors in relation to the lines NA and NB in different facial types. Am J Orthod 1970; 57: 1-14.
6. Shudy FF. Cant of the occlusal plane and axial inclinations of teeth. Angle Orthod. 1963; 33: 69-82.
7. Steiner CC. The use of cephalometrics as an aid to planning and assessing orthodontic treatment. Am J Orthod 1960; 46: 721-35.
8. Andrews LF. Six keys to normal occlusion. Am J Orthod 1972; 62: 296-309.
9a. US 6,200,278 B1; Gender Specific Soft Tissue Cephalometric Analysis For Diagnosis And Cephalometric Treatment Planning Of Facial Imbalance.
9b. US 5,951,498 A; Soft tissue cephalometric analysis for diagnosis and cephalometric treatment planning of facial imbalance.
10. Brezniak N, Arad A, Heller M, et al. Pathognomonic cephalometric characteristics of Angle Class II Division 2 malocclusion. Angle Orthod 2002; 72: 251-7.
11. Karlsen AT. Craniofacial characteristics in children with Angle Class II div. 2 malocclusion combined with extreme deep bite. Angle Orthod 1994; 64: 123-30.
12. Lux CJ, Raeth O, Burden D, et al. Sagittal and vertical growth of the jaws in Class II, Division 1 and Class II, Division 2 malocclusions during prepubertal and pubertal development. J Orofac Orthop 2004; 65: 290-311.
13. Mills JR. The problem of overbite in Class II, division 2 malocclusion. Br J Orthod 1973; 1: 34-48.
14. Pancherz H, Zieber K. Dentoskeletal morphology in children with Deckbiss. J Orofac Orthop 1998; 59: 274-85.
15. Devreese HO, Dermaut LR, De Pauw GAM. Upper incisor inclination and lip line: an orthodontic relationship? Eur J Orthod 2006; 28: e10-e11.
16. Fletcher GG. The retroclined upper incisor. Br J Orthod 1975; 2: 207-16.
17. Luffingham JK. The lower lip and the maxillary central incisor. Eur J Orthod 1982; 4: 263-8.
18. US 6,945,779 B2: Tooth Inclination Assessment.
19. Knösel M, Attin R, Kubein-Meesenburg D, Sadat-Khonsari R. Cephalometric assessment of the axial inclination of upper and lower incisors in relation to the thirdorder angle. J Orofac Orthop. 2007 May; 68 (3): 199-209.
20. Miethke RR, Behm-Menthel A. Correlations between lower incisor crowding and lower incisor position and lateral craniofacial morphology. Am J Orthod Dentofacial Orthop. 1988 Sep; 94 (3): 231-9.
21. Nahm KY, Kang JH, Moon SC, Choi YS, Kook YA, Kim SH, Huang J. Alveolar bone loss around incisors in Class I bidentoalveolar protrusion patients: a retrospective three-dimensional cone beam CT study. Dentomaxillofac Radiol. 2012 Sep; 41 (6): 481-8.
22. Tian YL, Liu F, Sun HJ, Lv P, Cao YM, Yu M, Yue Y. Alveolar bone thickness around maxillary central incisors of different inclination assessed with cone-beam computed tomography. Korean J Orthod. 2015 Sep; 45 (5): 245-52.
23. Lee KM1, Kim YI, Park SB, Son WS. Alveolar bone loss around lower incisors during surgical orthodontic treatment in mandibular prognathism. Angle Orthod. 2012 Jul; 82 (4): 637-44.
24. Fuhrmann R. Three-dimensional interpretation of labiolingual bone width of the lower incisors. Part II. 1996 Jun; 57 (3): 168-85.
25. Segner D., Hasund A.: Individualisierte Kephalometrie. 2. Auflage. Dietmar Segner Verlag, Hamburg 1994.

### Bezugszeichenliste

- 1: Kopf
- 2: Unterkieferknochen
- 3: Schneidezahn
- 4: Zahnkrone
- 5: Zahnwurzel
- 6: Zahnschmelzgrenze
- 7: Alveolarfortsatz
- 8: Unterkieferbasis
- 9: Nase
- 10: Kinn

## Patentansprüche

1. Verfahren zur kephalometrischen Bestimmung einer Kenngröße eines Individuums, umfassend das Bestimmen von Bezugspunkten in einer zwei- oder dreidimensionalen Aufnahme und das Bestimmen der Kenngröße aus den Bezugspunkten, wobei das Verfahren das
- Bestimmen eines ersten Bezugspunktes aL1, wobei der erste Bezugspunkt der Apex eines Schneidezahnes (3) am Unterkiefer ist;
- Bestimmen eines zweiten Bezugspunktes B, wobei der zweite Bezugspunkt als B-Punkt der tiefste Punkt der anterioren Kontur des Unterkiefer-Alveolarfortsatzes in der Median-Sagittal-Ebene und der dorsalste Punkt an der Kurvatur der Unterkiefersymphyse ist;
- Bestimmen eines dritten Bezugspunktes CEJ, wobei der dritte Bezugspunkt auf der Zahnschmelzgrenze (6) des Schneidezahnes (3) am Unterkiefer des Individuums liegt; und
- Bestimmen eines vierten Bezugspunktes CEJ2, der auf einer vertikalen Geraden (v), die durch den dritten Bezugspunkt CEJ verläuft, in Richtung der Unterkieferbasis (8) um einen Abstandswert (a) von dem dritten Bezugspunkt CEJ beabstandet ist, wobei der Abstandswert (a) in einem Bereich von 1,3 mm bis 2,3 mm liegt;
umfasst und aus dem ersten Bezugspunkt aL1, dem zweiten Bezugspunkt B und dem vierten Bezugspunkt CEJ2 ein als individuelle Kenngröße dienender Winkel aL1-CEJ2-B bestimmt wird, dessen Scheitelpunkt der vierte Bezugspunkt CEJ2 ist, dessen erster Schenkel eine Gerade ist, die den vierten Bezugspunkt CEJ2 mit dem ersten Bezugspunkt aL1 verbindet, und dessen zweiter Schenkel eine Gerade ist, die den vierten Bezugspunkt CEJ2 mit dem zweiten Bezugspunkt B verbindet.

2. Verfahren nach Anspruch 1, **dadurch gekennzeichnet, dass** der Abstandswert (a) 2 mm beträgt.

3. Verfahren nach Anspruch 1 oder Anspruch 2, **dadurch gekennzeichnet, dass** der Abstandswert (a) in Abhängigkeit von der Tiefe des Sulkus, der den Schneidezahn (3) umgibt, bestimmt wird.

4. Verfahren nach einem der vorstehenden Ansprüche, **dadurch gekennzeichnet, dass** die zwei- oder dreidimensionale Aufnahme mittels eines Röntgenverfahrens angefertigt wird.

5. Verfahren nach einem der vorstehenden Ansprüche, **dadurch gekennzeichnet, dass** die zwei- oder dreidimensionale Aufnahme ein Fernröntgenseitenbild ist.

6. Verfahren nach einem der vorstehenden Ansprüche, **dadurch gekennzeichnet, dass** die zwei- oder dreidimensionale Aufnahme mittels Computertomographie, Magnetresonanztomographie, dentaler Volumentomographie oder anderer 3D-Aufnahmetechniken angefertigt wird.

7. Verwendung eines Winkels aL1-CEJ2-B zur Beurteilung des Risikos eines Zahnfleisch- und/oder Knochenschwundes an einem Schneidezahn (3) eines Patienten, wobei das Risiko besteht, wenn der Winkel aL1-CEJ2-B einen Wert besitzt, der unterhalb eines Risikowertes liegt, aL1, B und CEJ2 Bezugspunkte in einer zwei- oder dreidimensionalen Aufnahme sind und
- aL1 ein erster Bezugspunkt ist, der der Apex des Schneidezahnes (3) am Unterkiefer ist;
- B ein zweiter Bezugspunkt ist, der als B-Punkt der tiefste Punkt der anterioren Kontur des Unterkiefer-Alveolarfortsatzes in der Median-Sagittal-Ebene und der dorsalste Punkt an der Kurvatur der Unterkiefersymphyse ist; und
- CEJ2 ein vierter Bezugspunkt ist, der auf einer vertikalen Geraden, die durch einen dritten Bezugspunkt CEJ in der zwei- oder dreidimensionalen Aufnahme verläuft, in Richtung der Unterkieferbasis (8) um einen Abstandswert von dem dritten Bezugspunkt CEJ beabstandet ist, wobei der dritte Bezugspunkt CEJ auf der die Zahnschmelzgrenze (6) des Schneidezahnes (3) am Unterkiefer des Patienten liegt und wobei der Abstandswert in einem Bereich von 1,3 mm bis 2,3 mm liegt;
wobei der Scheitelpunkt des Winkels aL1-CEJ2-B der vierte Bezugspunkt CEJ2 ist, der erster Schenkel des Winkels aL1-CEJ2-B eine Gerade ist, die den vierten Bezugspunkt CEJ2 mit dem ersten Bezugspunkt aLl verbindet, und der zweite Schenkel eine Gerade ist, die den vierten Bezugspunkt CEJ2 mit dem zweiten Bezugspunkt B verbindet.

8. Verwendung nach Anspruch 7, **dadurch gekennzeichnet, dass** der Abstandswert (a) 2 mm beträgt.

9. Verwendung nach Anspruch 7 oder Anspruch 8, **dadurch gekennzeichnet, dass** der Abstandswert (a) in Abhängigkeit von der Tiefe des Sulkus, der den Schneidezahn (3) umgibt, bestimmt ist.

10. Verwendung nach einem der Ansprüche 7 bis 9, **dadurch gekennzeichnet, dass** der Risikowert 16° ist.

11. Verfahren zur Beurteilung des Risikos eines Zahnfleisch- und/oder Knochenschwundes an einem Schneidezahn (3) eines Patienten, **dadurch gekennzeichnet, dass** es die Schritte umfasst:
(a) Bereitstellen einer zwei- oder dreidimensionalen Aufnahme des Kopfes (1) des Patienten oder eines Teils des Kopfes (1), der den Kiefer des Patienten umfasst;
(b) Bestimmen von Bezugspunkten in der zwei- oder dreidimensionalen Aufnahme, umfassend das
- Bestimmen eines ersten Bezugspunktes aL1, wobei der erste Bezugspunkt der Apex des Schneidezahnes (3) am Unterkiefer ist;
- Bestimmen eines zweiten Bezugspunktes B, wobei der zweite Bezugspunkt als B-Punkt der tiefste Punkt der anterioren Kontur des Unterkiefer-Alveolarfortsatzes in der Median-Sagittal-Ebene und der dorsalste Punkt an der Kurvatur der Unterkiefersymphyse ist;
- Bestimmen eines dritten Bezugspunktes CEJ, wobei der dritte Bezugspunkt auf der Zahnschmelzgrenze (6) des Schneidezahnes am Unterkiefer des Patienten liegt; und
- Bestimmen eines viertes Bezugspunktes CEJ2, der auf einer vertikalen Geraden, die durch den dritten Bezugspunkt CEJ verläuft, in Richtung der Unterkieferbasis (8) um einen Abstandswert (a) von dem dritten Bezugspunkt CEJ beabstandet ist, wobei der Abstandswert in einem Bereich von 1,3 mm bis 2,3 mm liegt;
(c) Bestimmen aus dem ersten Bezugspunkt aL1, dem zweiten Bezugspunkt B und dem vierten Bezugspunkt CEJ2 eines Winkels in der zwei- oder dreidimensionalen Aufnahme, dessen Scheitelpunkt der vierte Bezugspunkt CEJ2 ist, dessen erster Schenkel eine Gerade ist, die den vierten Bezugspunkt CEJ2 mit dem ersten Bezugspunkt aL1 verbindet, und dessen zweiter Schenkel eine Gerade ist, die den vierten Bezugspunkt CEJ2 mit dem zweiten Bezugspunkt B verbindet; und
(d) Beurteilung des Risikos eines Zahnfleisch- und/oder Knochenschwundes an dem Schneidezahn (3) des Patienten unter Verwendung des Winkels aL1-CEJ2-B als Risikowert, wobei das Risiko eines Zahnfleisch- und/oder Knochenschwundes besteht, wenn der Winkel aL1-CEJ2-B einen Wert besitzt, der unterhalb eines Risikowertes liegt.

12. Verfahren nach Anspruch 11, **dadurch gekennzeichnet, dass** der Abstandswert (a) 2 mm beträgt.

13. Verfahren nach Anspruch 11 oder Anspruch 12, **dadurch gekennzeichnet, dass** der Abstandswert (a) in Abhängigkeit von der Tiefe des Sulkus, der den Schneidezahn umgibt, bestimmt ist.

14. Verfahren nach einem der Ansprüche 11 bis 13, **dadurch gekennzeichnet, dass** der Risikowert 16° ist.

15. Verfahren nach einem der Ansprüche 11 bis 14, **dadurch gekennzeichnet, dass** es vor einer kieferorthopädischen oder parodontalen Therapie durchgeführt wird.

## Claims

1. A method for cephalometrically determining a parameter of an individual comprising determining points of reference in a two or three-dimensional image and determining the parameter from the points of reference, wherein the method comprises
- determining a first point of reference aL1 with the first point of reference being the apex of an incisor (3) on the mandible;
- determining a second point of reference B with the second point of reference as B point being the lowest point of the anterior contour of the mandibular alveolar process in the median sagittal plane and the most dorsal point on the curvature of the mandibular symphysis;
- determining a third point of reference CEJ with the third point of reference being on the cemento-enamel junction (6) of the incisor (3) on the mandible of the individual; and
- determining a fourth point of reference CEJ2 that on a vertical straight line (v) that extends through the third point of reference CEJ is spaced apart from the third point of reference CEJ toward the base of the mandible (8) by a distance value (a) with the distance value (a) being in a range of 1.3 mm to 2.3 mm;
and from the first point of reference aL1, the second point of reference B, and the fourth point of reference CEJ2 an angle aL1-CEJ2-B serving as an individual parameter is determined, the apex of which is the fourth point of reference CEJ2, the first side of which is a straight line connecting the fourth point of reference CEJ2 with the first point of reference aL1, and the second side of which is a straight line connecting the fourth point of reference CEJ2 with the second point of reference B.

2. The method according to claim 1, **characterized in that** the distance value (a) is 2 mm.

3. The method according to claim 1 or claim 2, **characterized in that** the distance value (a) is determined depending on the depth of the sulcus surrounding the incisor (3).

4. The method according to any of the preceding claims, **characterized in that** the two or three-dimensional image is taken by means of an x-ray process.

5. The method according to any of the preceding claims, **characterized in that** the two or three-dimensional image is an x-ray teleradiograph.

6. The method according to any of the preceding claims, **characterized in that** the two or three-dimensional image is taken by means of computerized tomography, magnetic resonance tomography, dental volume tomography, or other 3D imaging techniques.

7. Use of an angle aL1-CEJ2-B for assessing the risk of gingival recession and/or bone loss on an incisor (3) of a patient, where there is a risk if the angle aL1-CEJ2-B has a value below the risk value, aL1, B, and CEJ2 are points of reference in a two or three-dimensional image, and
- aL1 is a first point of reference being the apex of the incisor (3) on the mandible;
- B is a second point of reference being as B point the lowest point of the anterior contour of the mandibular alveolar process in the median sagittal plane and the most dorsal point on the curvature of the mandibular symphysis; and
- CEJ2 is a fourth point of reference that on a vertical straight line (v) that extends through the third point of reference CEJ is spaced apart from the third point of reference CEJ toward the base of the mandible (8) by a distance value with the third point of reference CEJ being on the cementoenamel junction (6) of the incisor (3) on the mandible of the patient and with the distance value being in the range of 1.3 mm to 2.3 mm;
wherein the apex of the angle aL1-CEJ2-B is the fourth point of reference CEJ2, the first side of the angle aL1-CEJ2-B is a straight line connecting the fourth point of reference CEJ2 with the first point of reference aL1, and the second side is a straight line connecting the fourth point of reference CEJ2 with the second point of reference B.

8. Use according to claim 7, **characterized in that** the distance value (a) ist 2 mm.

9. Use according to claim 7 or claim 8, **characterized in that** the distance value (a) is determined depending on the depth of the sulcus surrounding the incisor (3).

10. Use according to any of claims 7 to 9, **characterized in that** the risk value is 16°.

11. A method for assessing the risk for gingival recession and/or bone loss on an incisor (3) of a patient, **characterized in that** it comprises the steps of:
(a) providing a two or three-dimensional image of the head (1) of the patient or a part of the head (1) comprising the jaw of the patient;
(b) determining points of reference in the two or three-dimensional image comprising
- determining a first point of reference aL1 with the first point of reference being the apex of an incisor (3) on the mandible;
- determining a second point of reference B with the second point of reference as B point being the lowest point of the anterior contour of the mandibular alveolar process in the median sagittal plane and the most dorsal point on the curvature of the mandibular symphysis;
- determining a third point of reference CEJ with the third point of reference being on the cemento-enamel junction (6) of the incisor (3) on the mandible of the individual; and
- determining a fourth point of reference CEJ2 that on a vertical straight line (v) that extends through the third point of reference CEJ is spaced apart from the third point of reference CEJ toward the base of the mandible (8) by a distance value (a) with the distance value (a) being in a range of 1.3 mm to 2.3 mm;
(c) determining from the first point of reference aL1, the second point of reference B, and the fourth point of reference CEJ2 an angle in the two or three-dimensional image, the apex of which is the fourth point of reference CEJ2, the first side of which is a straight line connecting the fourth point of reference CEJ2 with the first point of reference aL1, and the second side of which is a straight line connecting the fourth point of reference CEJ2 with the second point of reference B; and
(d) assessing the risk of gingival recession and/or bone loss on the incisor (3) of the patient using the angle aL1-CEJ2-B as a risk value, wherein there is a risk of gingival recession and/or bone loss if the angle aL1-CEJ2-B has a value below a risk value.

12. The method according to claim 11, **characterized in that** the distance value (a) is 2 mm.

13. The method according to claim 11 or claim 12, **characterized in that** the distance value (a) is determined depending on the depth of the sulcus surrounding the incisor.

14. The method according to any of claims 11 to 13, **characterized in that** the risk value is 16°.

15. The method according to any of claims 11 to 14, **characterized in that** it is performed before an orthodontic or periodontal therapy.

## Revendications

1. Procédé pour la définition céphalométrique d'une valeur caractéristique d'un individu, comprenant la définition de points de référence dans une imagerie bi- ou tridimensionnelle et la définition de la grandeur de la valeur caractéristique à partir de ces points de référence, ce procédé comprenant
- la définition d'un premier point de référence aL1, ce premier point de référence étant l'apex d'une incisive (3) du maxillaire inférieur;
- la définition d'un deuxième point de référence B, ce deuxième point de référence, en tant que point B, étant le point le plus bas du contour antérieur du prolongement alvéolaire du maxillaire inférieur dans le plan médian-sagittal et le point le plus dorsal de la courbure de la symphyse du maxillaire inférieur;
- la définition d'un troisième point de référence CEJ, ce troisième point de référence se trouvant à la limite de l'émail dentaire (6) de l'incisive (3) du maxillaire inférieur de l'individu; et
- la définition d'un quatrième point de référence CEJ2, qui est éloigné d'une valeur de l'espacement (a) du troisième point de référence CEJ sur une droite verticale (v) croisant le troisième point de référence CEJ, en direction de la base du maxillaire inférieur (8), la valeur de l'espacement (a) étant située dans une zone comprise entre 1,3 mm et 2,3 mm;
et qui est défini, à partir du premier point de référence aL1, du deuxième point de référence B et du quatrième point de référence CEJ2, comme angle aL1-CEJ2-B servant de grandeur caractéristique individuelle, angle dont le point de rebroussement est le quatrième point de référence CEJ2, et dont la première branche est une droite qui relie le quatrième point de référence CEJ2 au premier point de référence aL1, et dont la deuxième branche est une droite qui relie le quatrième point de référence CEJ2 au deuxième point de référence B.

2. Procédé selon la revendication 1, **caractérisé par le fait que** la valeur d'espacement (a) est de 2 mm.

3. Procédé selon la revendication 1 ou la revendication 2, **caractérisé par le fait que** la valeur d'espacement (a) est déterminée en fonction de la profondeur de la scissure qui entoure l'incisive (3).

4. Procédé selon une des revendications précédentes, **caractérisé par le fait que** la représentation bi- ou tridimensionnelle est obtenue au moyen d'un procédé radiographique.

5. Procédé selon une des revendications précédentes, **caractérisé par le fait que** la représentation bi- ou tridimensionnelle est une téléradiographique de profil.

6. Procédé selon une des revendications précédentes, **caractérisé par le fait que** l'image bi- ou tridimensionnelle est obtenue au moyen de tomodensitométrie, de tomographie par résonance magnétique, de tomographie volumique dentaire ou autre technique d'imagerie en 3D.

7. Utilisation d'un angle aL1-CEJ2-B pour l'évaluation du risque d'une atrophie de la gencive et/ou de l'os d'une incisive (3) d'un patient, le risque consistant, si l'angle aL1-CEJ2-B possède une valeur se situant au-dessous d'une valeur de risque, à ce que aL1, B et CEJ2 sont les points de référence dans une image bi- ou tridimensionnelle, et que
- aL1 est un premier point de référence qui est l'apex de l'incisive (3) du maxillaire inférieur;
- B est un deuxième point de référence qui, en tant que point B, est le point le plus bas du contour antérieur du prolongement alvéolaire du maxillaire inférieur dans le plan médian-sagittal et le point le plus dorsal sur la courbure de la symphyse maxillaire inférieure; et
- CEJ2 est un quatrième point de référence qui, sur une droite verticale qui s'étend en croisant un troisième point CEJ dans l'image bi- ou tridimensionnelle, se trouve en direction de la base du maxillaire inférieur (8) à une valeur d'espacement du troisième point de référence CEJ, le troisième point de référence CEJ étant situé à la limite de l'émail dentaire (6) de l'incisive (3) sur le maxillaire inférieur du patient, et la valeur d'espacement se trouvant dans une zone comprise entre 1,3 mm et 2,3 mm;
le point de rebroussement du angle aL1-CEJ2-B étant le quatrième point de référence CEJ2, la première branche du angle aL1-CEJ2-B étant une droite qui relie le quatrième point de référence CEJ2 au premier point de référence aL1, et la deuxième branche étant une droite qui relie le quatrième point de référence CEJ2 au deuxième point de référence B.

8. Utilisation selon la revendication 7, **caractérisée par le fait que** la valeur d'espacement (a) est de 2 mm.

9. Utilisation selon la revendication 7 ou la revendication 8, **caractérisée par le fait que** la valeur d'espacement (a) est définie en fonction de la profondeur de la scissure qui entoure l'incisive (3).

10. Utilisation selon une des revendications 7 à 9, **caractérisée par le fait que** la valeur de risque est de 16°.

11. Procédé pour l'évaluation du risque d'une atrophie de la gencive et/ou de l'os autour d'une incisive (3) d'un patient, **caractérisé par le fait qu'**il comprend les étapes suivantes:
(a) disposer d'une imagerie bi- ou tridimensionnelle de la tête (1) du patient ou d'une partie de la tête (1) qui montre l'ensemble de la mâchoire;
(b) définition de points de référence dans l'imagerie bi- ou tridimensionnelle comprenant
- la définition d'un premier point de référence aL1, le premier point de référence étant l'apex de l'incisive (3) sur le maxillaire inférieur;
- la définition d'un deuxième point de référence B, ce deuxième point de référence, en tant que point B, étant le point le plus bas du contour antérieur du prolongement alvéolaire du maxillaire inférieur dans le plan médian-sagittal et le point le plus dorsal de la courbure de la symphyse du maxillaire inférieur;
- la définition d'un troisième point de référence CEJ, ce troisième point de référence se trouvant à la limite de l'émail (6) de l'incisive du maxillaire inférieur du patient; et
- la définition d'un quatrième point de référence CEJ2, qui est éloigné d'une valeur de l'espacement (a) du troisième point de référence CEJ sur une droite verticale croisant le troisième point de référence CEJ, en direction de la base du maxillaire inférieur (8), la valeur de l'espacement étant située dans une zone comprise entre 1,3 mm et 2,3 mm;
(c) définition à partir du premier point de référence aL1, du deuxième point de référence B et du quatrième point de référence CEJ2 d'un angle sur une image bi- ou tridimensionnelle dont le point de rebroussement est le quatrième point de référence CEJ2, angle dont la première branche est une droite qui relie le quatrième point de référence CEJ2 au premier point de référence aL1, et dont la deuxième branche est une droite qui relie le quatrième point de référence CEJ2 au deuxième point de référence B; et
(d) évaluation du risque d'une atrophie de la gencive et/ou de l'os autour d'une incisive (3) du patient en utilisant l'angle aL1-CEJ2-B comme valeur de risque, le risque d'une atrophie de la gencive et/ou de l'os étant existant lorsque l'angle aL1-CEJ2-B possède une valeur qui se trouve sous une valeur de risque.

12. Procédé selon la revendication 11, **caractérisé par le fait que** la valeur d'espacement (a) est de 2 mm.

13. Procédé selon la revendication 11 ou la revendication 12, **caractérisé par le fait que** la valeur d'espacement (a) est déterminée en fonction de la profondeur de la scissure qui entoure l'incisive.

14. Procédé selon une des revendications 11 à 13, **caractérisé par le fait que** la valeur de risque est de 16°.

15. Procédé selon une des revendications 11 à 14, **caractérisé par le fait qu'**il est pratiqué avant une thérapie orthodontique ou parodontale.
